# DEMANDE DE BREVET EUROPEEN

(11) **EP 1 103 878 A1**
(43) Date de publication de la demande: **30.05.2001**
(21) Numéro de dépôt: 00403174.6
(22) Date de dépôt: 14.11.2000
(51) Int. Cl.: G05D 16/06

(54) **Robinet détendeur**

(30) Priorité: 29.11.1999 FR 9915007
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Pisot, Philippe, 95290 L'Isle Adam (FR)
(74) Mandataire: Pittis, Olivier

(57) **Abrégé**

L'invention concerne un robinet-détendeur pour récipients de fluide sous pression.

Il se caractérise en ce qu'il utilise le clapet de détente comme système d'arrêt.

Dans un mode de réalisation, en faisant pivoter le levier (36) associé à la came (40), on réalise par l'intermédiaire de la tige (28, 28a) une compression du ressort de détente (16). La consigne de pression appliquée à la membrane (14) devenant nulle, le clapet (12) se ferme.

Le réglage de la pression de détente est obtenu en faisant tourner la pièce filetée (18) à l'aide du levier (36). La translation de la pièce (18) est transmise au ressort de détente par la tige carrée (28) et le plateau (24)

## Description

La présente invention a pour objet un robinet-détendeur, notamment pour la distribution de gaz sous pression contenus dans des bouteilles ad hoc et un récipient pour fluide sous pression équipé d'un tel robinet-détendeur.

On sait que de nombreux gaz, notamment des gaz industriels, sont stockés sous haute pression dans des bouteilles qui sont obturées par un robinet. Par ailleurs, la pression à laquelle ces gaz sont stockés est très largement supérieure à la pression d'utilisation desdits gaz. Il est donc nécessaire de prévoir leur détente pour les amener à la pression souhaitée en vue de leur utilisation.

Pour réaliser cette fonction, il existe actuellement deux possibilités.

Dans la première solution, la bouteille contenant le gaz sous pression est seulement équipée d'un robinet ou bloc robinet. L'utilisateur doit visser sur le robinet un détendeur qui est en général sa propriété. Cette situation présente un certain nombre d'inconvénients et complique en fait l'utilisation de telles bouteilles.

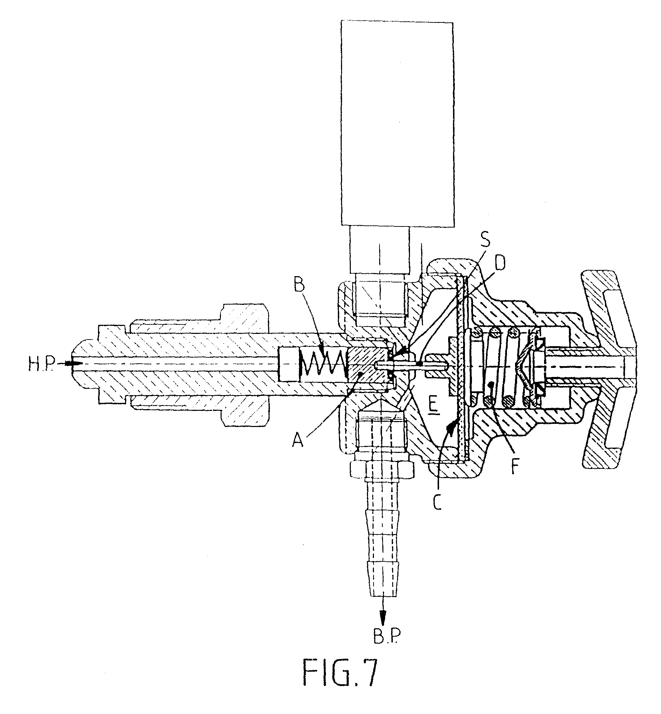

La figure 7 annexée illustre schématiquement le fonctionnement d'un tel détendeur. Comme le montre la figure 7, le bloc robinet-détendeur comprend un clapet A coopérant avec un siège S assurant ainsi l'étanchéité entre la HP et la BP. Le clapet A est associé à un ressort de clapet B. Le clapet A est solidaire en translation d'une membrane déformable C par une tige D.

La membrane C est soumise d'une part à la basse pression BP régnant dans la chambre E et d'autre part à l'action du ressort de détente F. La contrainte exercée par le ressort F est réglable, ce qui permet de régler et réguler la basse pression.

Dans un tel détendeur, la basse pression BP dépend d'une part de l'effort fourni par le ressort de détente F (dont le réglage en contrainte fournit la consigne de réglage de la pression d'utilisation) et d'autre part de la résultante des efforts correspondant au ressort de clapet B, à l'action de la haute pression HP sur la section utile du clapet A et à l'action de la basse pression BP sur la section utile de la membrane C.

C'est la raison pour laquelle un deuxième type de bouteille est proposé pour la fourniture de gaz sous pression, bouteilles qui sont dès le départ équipées d'un bloc robinet-détendeur intégré à la bouteille, ce qui permet ainsi à l'utilisateur de disposer directement du gaz stocké à la pression d'utilisation.

Dans le cas de la deuxième famille de produits, le bloc robinet est remplacé :
soit par un dispositif d'ouverture et de fermeture ergonomique et rapide tel que le levier décrit dans le document EP 747 796 qui permet de mémoriser les réglages de précision et d'indiquer l'état du système. Cependant, il impose d'intégrer un tel dispositif avec un clapet en plus des clapets déjà existant de détente et de remplissage sur la bouteille. Cela implique des problèmes d'encombrement de maintenance et le nombre de pièces accroît nécessairement le coût du dispositif ;
soit par l'action sur le volant de détente. Si l'on visse ce volant, on effectue le réglage de la basse pression et, si on le dévisse, on arrête le débit de fluide. Ce système est très simple et peu coûteux car la fonction est assurée par le clapet de détente, mais la manoeuvre n'est pas rapide et ne permet donc pas un arrêt d'urgence et il n'y a pas de mémorisation du réglage de la basse pression ;
soit encore par l'action d'un levier sur une valve qui assure la détente, mais avec un réglage fixe de basse pression qui limite considérablement les possibilités d'utilisation de ce système de robinet et de détente.

Un objet de la présente invention est de fournir un bloc robinet-détendeur qui soit d'une organisation mécanique simplifiée, qui permette effectivement un arrêt d'urgence rapide, qui permette de conserver le réglage de la basse pression même après une manoeuvre d'arrêt d'urgence et dans lequel l'état d'Arrêt ou de Marche soit visuellement accessible à l'utilisateur du dispositif.

Pour atteindre ce but selon l'invention, le robinet-détendeur comprend
- un corps présentant un axe longitudinal et muni d'une entrée de fluide à haute pression et d'une sortie de fluide à basse pression, et, à l'intérieur dudit corps :
- un ressort de détente,
- une membrane déformable sur laquelle agit une première extrémité du ressort de détente,
- un clapet dont une première extrémité est solidaire en translation de ladite membrane ; et
- un ressort de clapet dont une première extrémité est reliée à la deuxième extrémité du clapet,
ledit robinet-détendeur comprenant en outre :
- un ensemble de réglage de la basse pression comportant :
- un dispositif de réglage monté rotatif autour dudit axe longitudinal,
- des moyens de conversion dudit mouvement de rotation du dispositif de réglage en un mouvement de translation selon ledit axe longitudinal, et
- un organe de transmission, relié à la sortie des moyens de conversion, et mobile en translation selon ledit axe longitudinal sous l'effet des moyens de conversion, pour appliquer à la deuxième extrémité du ressort de détente une contrainte de réglage ; et
- un ensemble de commande de Marche-Arrêt dudit robinet comportant :
   - au moins un organe de commande distinct dudit dispositif de réglage, apte à prendre par rapport audit dispositif de réglage une première position de Marche et une deuxième position d'Arrêt, l'actionnement dudit organe de réglage étant indépendant de la position angulaire dudit dispositif de réglage, et
   - un mécanisme de commande apte, lorsque ledit organe de commande est dans sa deuxième position d'Arrêt, à :
      . soit supprimer la contrainte appliquée par ledit ressort de détente à ladite membrane, par quoi la consigne de réglage de la basse pression est nulle et le clapet est fermé,
      . soit appliquer à la deuxième extrémité dudit ressort de clapet une contrainte telle que la force exercée par ledit ressort sur ledit clapet en interdisant l'ouverture.

On comprend tout d'abord que c'est le clapet de détente qui permet lui-même l'arrêt d'urgence, ce qui évite donc d'avoir à prévoir un clapet additionnel. Cet arrêt d'urgence est obtenu soit en appliquant par l'intermédiaire du ressort de détente une consigne de pression nulle à la membrane, ce qui provoque la fermeture du clapet soit en appliquant au clapet une contrainte élevée, de préférence par son ressort de clapet, qui produit également la fermeture du clapet de détente.

En outre, on comprend que la manoeuvre du ou des organes d'arrêt rapide et de remise en marche ne modifie pas le réglage de la basse pression obtenue à l'aide du dispositif de l'ensemble de réglage de basse pression et que l'organe de commande occupe une position spécifique par rapport à l'organe de réglage selon qu'on est dans un état de marche ou dans un état d'arrêt.

Selon un premier mode de mise en oeuvre, le robinet-détendeur se caractérise en ce que lesdits moyens de conversion comprennent un manchon fileté extérieurement solidaire en rotation dudit dispositif de réglage coopérant avec un taraudage ménagé dans le corps du robinet, et en ce que ledit organe de commande comporte une portion formant came montée pivotante autour d'un axe orthogonal audit axe longitudinal et apte à coopérer avec ledit mécanisme de commande, ladite came présentant une première zone dans laquelle la contrainte appliquée par le ressort de détente à la membrane est annulée et une deuxième zone dans laquelle ladite contrainte est effectivement appliquée.

On comprend que, dans ce mode de réalisation, la fonction de commande Marche-Arrêt est constituée par une came rotative qui, selon sa position, interrompt le débit de fluide ou, au contraire, autorise ce débit.

Selon un deuxième mode de mise en oeuvre de l'invention, le robinet détendeur se caractérise en ce que ledit organe de commande comprend :
. un premier organe de commande de marche mobile selon la direction dudit axe longitudinal et maintenu en position active par un système à billes qui en position verrouillée solidarise en translation ledit premier organe de commande audit corps dans une position où ledit ressort de détente applique une contrainte à ladite membrane, ledit premier organe de commande étant apte à coopérer avec ledit ressort de détente,
. un deuxième organe de commande d'arrêt formant poussoir associé à un ressort de rappel, ledit poussoir comportant une portion formant rampe apte à coopérer avec lesdites billes, ladite portion formant rampe au repos maintenant lesdites billes en position de verrouillage, et, lorsque ledit premier organe de commande est en position active, sous l'effet d'une pression sur ledit poussoir, ladite portion formant rampe sous l'effet du déplacement résultant de ladite pression, déverrouillant lesdites billes, par quoi ledit premier organe de commande est déplacé par l'effet du ressort de détente pour occuper une position inactive dans laquelle la contrainte appliquée par le ressort de détente à ladite membrane est supprimée.

On comprend que, selon ce mode de réalisation, on trouve deux organes distincts de commande pour la mise en marche et pour l'arrêt rapide du système. Le maintien dans la position Marche est assuré par un système à billes.

Selon un troisième mode de mise en oeuvre, le robinet-détendeur se caractérise en ce que
- ledit dispositif de réglage est un volant ;
- lesdits moyens de conversion comprennent un manchon fileté extérieurement coopérant avec un taraudage ménagé dans ledit corps du robinet, une première extrémité du manchon étant solidaire dudit volant et dont la deuxième extrémité est solidaire en translation dudit organe de transmission ;
- ledit mécanisme de commande comprend une tige mobile en translation selon ledit axe longitudinal dont une première extrémité est appliquée contre la deuxième extrémité du ressort de clapet ; et
- ledit organe de commande comprend des moyens d'actionnement, coopérant avec la deuxième extrémité de ladite tige et aptes à prendre une première position de Marche dans laquelle la première extrémité de la tige applique au ressort de clapet la contrainte normale de fonctionnement et une deuxième position dans laquelle la première extrémité de ladite tige applique au ressort de clapet ladite contrainte interdisant l'ouverture du clapet.

On comprend que, selon ce mode de réalisation, la fonction d'arrêt rapide et donc de marche est assurée par un organe totalement distinct de l'organe de réglage qui agit sur le ressort de clapet pour appliquer à celui-ci une contrainte élevée interrompant le débit de fluide lorsque l'on veut mettre en oeuvre la fonction d'arrêt rapide.

L'invention a également pour objet des récipients pour fluide sous pression qui sont équipés d'un robinet-détendeur d'un des types définis ci-dessus.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :
- les figures 1a et 1b montrent en coupe longitudinale un premier mode de réalisation du bloc du robinet-détendeur respectivement en position de Marche et en position d'Arrêt ;
- les figures 2a et 2b montrent en coupe longitudinale un deuxième mode de réalisation du bloc robinet-détendeur respectivement en position de Marche et en position d'Arrêt ;
- la figure 3a est une vue en coupe longitudinale d'un troisième mode de réalisation du bloc robinet-détendeur ;
- les figures 3b et 3c sont des vues partielles de la figure 3a montrant les positions relatives des organes de commande et de réglage respectivement en Marche et à l'Arrêt ;
- la figure 4a est une vue en coupe longitudinale d'un quatrième mode de réalisation du bloc robinet-détendeur en coupe longitudinale ;
- les figures 4b et 4c sont des vues partielles de la figure 4a montrant les organes de réglage et de commande respectivement en position de marche et en position d'arrêt rapide ;
- la figure 5 est une vue en coupe longitudinale d'un cinquième mode de réalisation du bloc robinet-détendeur ;
- la figure 6 est une vue en coupe longitudinale d'un sixième mode de réalisation du bloc robinet-détendeur ; et
- la figure 7 est une vue schématique déjà décrite montrant les éléments principaux d'un détendeur.

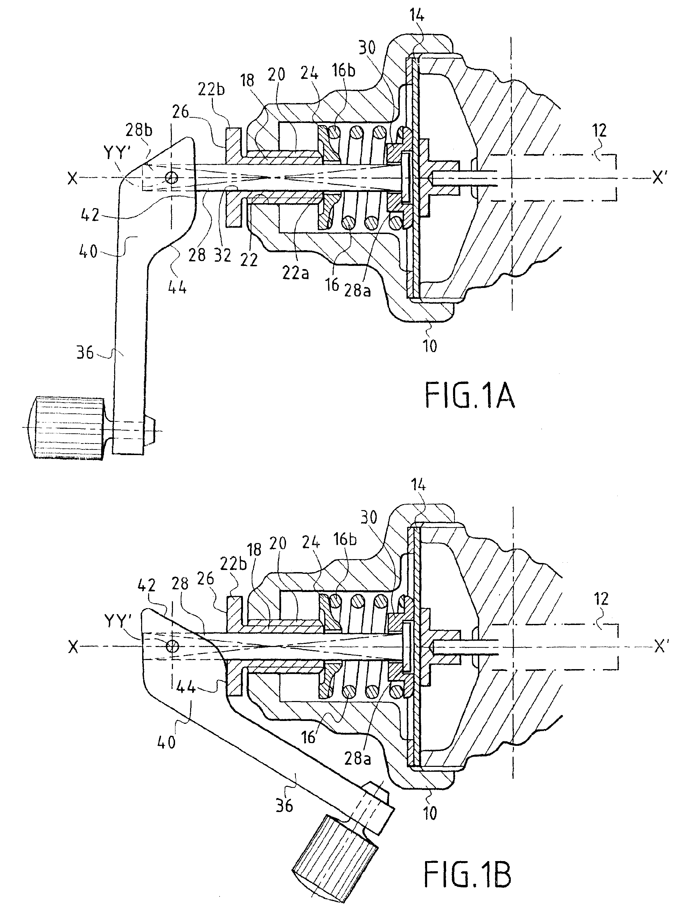

En se référant tout d'abord aux figures 1a et 1b, on va décrire un premier mode de réalisation du bloc robinet-détendeur dans lequel l'arrêt d'urgence est obtenu en exerçant une traction sur l'extrémité du ressort de détente relié à la membrane et dans lequel l'arrêt d'urgence est obtenu manoeuvrant un levier.

Sur cette figure qui ne montre qu'une partie du bloc robinet-détendeur, on a représenté le corps 10 de cet ensemble ainsi que l'emplacement 12 occupé par le clapet de détente, la membrane de commande 14 qui est reliée à une extrémité du clapet 12 et le ressort de détente 16 qui est appliqué en fonctionnement normal contre l'autre face de la membrane 14.

Le réglage de la basse pression est obtenu à l'aide d'un manchon 18 comportant un filetage externe 20 qui coopère avec un alésage taraudé 22 réalisé dans le corps 10 du bloc robinet-détendeur selon l'axe longitudinal X-X' de celui-ci. Le manchon comporte une première extrémité 22a qui coopère au moins en translation avec un plateau 24 lui-même appliqué sur la deuxième extrémité 16b du ressort de détente 16. Sur sa deuxième extrémité 22b qui est extérieure au corps 10, le manchon est muni d'une collerette définissant une face d'appui 26. On comprend que la rotation du manchon 22 autour de l'axe X-X' entraîne un déplacement correspondant du plateau 24 et donc une modification de la contrainte appliquée au ressort de détente 16.

La fonction Marche-Arrêt est réalisée à l'aide d'une tige 28 mobile en translation et disposée selon l'axe X-X' du corps du bloc robinet-détendeur. La tige 28 comporte une extrémité 28a qui est solidaire en translation d'une pièce 30 elle-même solidaire de la partie centrale de la membrane 14. La tige 28 est engagée à coulissement dans le manchon 22 mais solidaire en rotation de celui-ci. Avantageusement, la tige 28 est cannelée ou à section droite rectangulaire, le manchon 28 comportant un alésage axial 32 de forme correspondante. L'extrémité 28b de la tige 28 fait saillie hors de la face d'appui 26 du manchon 18. Cette extrémité est équipée d'un levier 36 articulé autour d'un axe Y-Y' orthogonal à l'axe X-X' du corps du bloc robinet-vanne et donc de l'axe longitudinal de la tige 28. L'extrémité 40 du levier 36 articulé sur la tige 28 constitue une came 40 comportant une zone neutre 42 et une zone active 44. Sur la figure 1a, le levier 36 occupe la position de Marche et c'est la portion inactive de la came 42 qui est en regard de la face d'appui 26 du manchon 18 de telle manière qu'il n'y ait pas de contact entre la face 26 et la came 40. La tige 28 est libre à l'intérieur du manchon 18 et le ressort de détente 16 applique la contrainte à la membrane, contrainte qui a été déterminée par la position du manchon 18. En revanche, lorsque le levier 36 est amené dans la position représentée sur la figure 1b, c'est la partie active 44 de la came qui coopère avec la face d'appui 26 du manchon exerçant ainsi une traction sur la tige 28. Cette traction est transmise à l'extrémité du ressort de détente 16, ce ressort n'appliquant donc plus aucune contrainte sur la membrane 14. La consigne de réglage de pression devenant nulle, le clapet 12 se ferme.

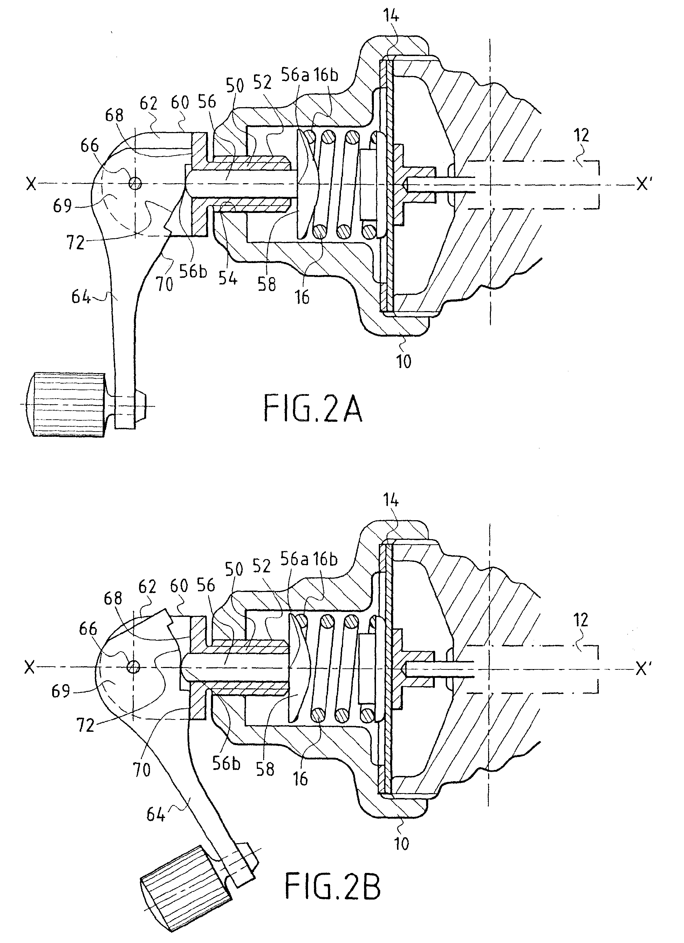

En se référant maintenant aux figures 2a et 2b, on va décrire un deuxième mode de réalisation du bloc robinet-détendeur qui est proche du premier mode de réalisation.

Sur ces figures, on retrouve le corps du bloc robinet-détendeur 10, l'emplacement du clapet 12, la membrane déformable de réglage 14 et le ressort de détente 16. Dans ce mode de réalisation, le réglage de la consigne de basse pression est obtenu également par un manchon 50 fileté sur sa face externe 52 et coopérant avec un alésage taraudé 54 ménagé dans le corps 10 du bloc selon l'axe longitudinal X-X' de celui-ci. A l'intérieur du manchon 50 est montée libre en rotation et en translation une tige 56.

L'extrémité 56a de la tige 56 est solidaire d'un plateau 58 apte à coopérer avec l'extrémité 16b du ressort de détente 16. Le manchon 50 est prolongé par un plateau 60 externe au corps 10 qui est muni de deux ailes parallèles 62. Un levier 64 est monté pivotant autour d'un axe 66 dont les extrémités sont engagées dans les ailes 62. L'axe 66 est orthogonal à l'axe XX' du corps 10 et donc à la tige 56. L'extrémité 69 du levier 64 définit deux portées d'appui 68 et 70 et une came 72 s'étendant entre les portées 68 et 70 et apte à coopérer avec l'extrémité libre 56b de la tige 56.

Selon la position angulaire du levier 64, la portée 68 ou la portée 70 vient en appui sur la face externe 60a du plateau 60.

Sur la figure 2a, le levier 64 occupe sa position de Marche. La portée 68 est en appui sur le plateau 60. Dans cette position, la came 72 agit sur l'extrémité 56b de la tige 56 qui met sous contrainte le ressort de détente 16.

C'est également dans cette position du levier 64 que l'on effectue le réglage de la basse pression, c'est-à-dire le réglage de la contrainte du ressort de détente. A l'aide du levier 64, on provoque la rotation du manchon 50 autour de l'axe XX'. Cette rotation est convertie en une translation du manchon 50 selon la direction XX', translation qui est transmise à la tige 56 et au plateau 58 par l'intermédiaire de la came 72 du levier.

Sur la figure 2b, on a représenté le levier 64 dans sa position d'arrêt. C'est la partie 70 qui est en contact avec la face 60a du plateau 60. Dans cette position, la came 72 n'est pas en contact avec l'extrémité 56b de la tige 56. Le ressort de détente 16 ne reçoit donc aucune contrainte du plateau 58. La consigne de basse pression étant nulle, le clapet se ferme.

Il faut souligner que le réglage de la consigne est réalisé lorsque le levier 64 est dans la position de Marche représentée sur la figure 2a. L'extrémité 56b de la tige de réglage 56 occupe donc une position parfaitement définie par rapport à la surface d'appui 60a, ce qui assure le fait que, même après un arrêt du bloc robinet-détendeur par action sur le levier 64, on retrouvera exactement la même consigne de réglage.

On comprend que, dans les deux modes de réalisation décrits précédemment, le réglage de la pression de consigne est obtenu par la rotation du manchon 18 ou 50. Plus précisément, ce réglage est obtenu en faisant tourner ce manchon à l'aide du levier 36 ou 64. Il va cependant de soi que les plateaux de pression respectivement 26 et 60 pourraient être équipés d'un volant externe servant au réglage de pression, les leviers 36 et 64 ne servant alors qu'à la commande Marche-Arrêt selon leur position angulaire.

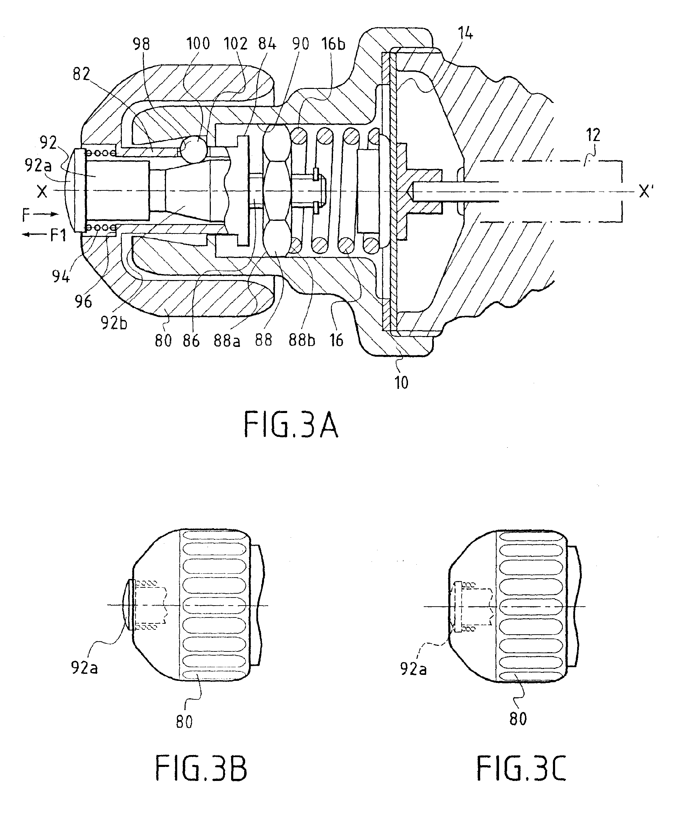

En se référant maintenant aux figures 3a à 3c, on va décrire un troisième mode de réalisation du bloc robinet-détendeur. Dans ce mode de réalisation, l'arrêt est obtenu également en cessant de soumettre le ressort de détente à la contrainte de réglage. En revanche, le bloc robinet-détendeur est équipé de deux organes différents pour commander respectivement la Marche et l'Arrêt d'urgence.

Dans ce mode de réalisation, le réglage de la consigne de pression est réalisé par l'intermédiaire d'un volant 80 solidaire d'un corps cylindrique 82 monté rotatif à l'intérieur du corps 10 du robinet-détendeur et guidé en rotation autour de l'axe longitudinal X-X' par tout moyen convenable. L'extrémité libre du corps cylindrique 82 est, par exemple, obturée par une plaque 84 sur laquelle est fixée une tige filetée 86 disposée selon l'axe longitudinal X-X'. La tige filetée 86 coopère avec un écrou 88 dont le contour externe 88a est polygonal et coopère avec la face interne 90 de la partie correspondante du corps 10 du robinet. Ainsi, l'écrou 88 peut se déplacer en translation selon l'axe X-X', mais il est immobilisé en rotation. Une des faces latérales 88b de l'écrou 88 constitue un plateau de pression et est appliquée sur la deuxième extrémité 16b du ressort de détente 16. On comprend qu'en faisant tourner le volant 80, on entraîne également la rotation de la tige filetée 86 et le déplacement correspondant de l'écrou 88 dont la face 88b permet de régler la contrainte appliquée au ressort de détente 16.

La fonction Marche-Arrêt est réalisée par deux organes distincts constitués d'une part par le volant de réglage 80 et d'autre part par un poussoir 92 qui est monté à l'intérieur du corps cylindrique 82. Un ressort de rappel 94 est interposé entre la tête 92a du poussoir 92 et un épaulement 96 réalisé à la deuxième extrémité du corps cylindrique 82. Le poussoir 92 comporte une deuxième extrémité 92b qui constitue une came de forme générale tronconique évasée.

Comme on l'a déjà indiqué, le corps cylindrique 82 sert à la liaison cinématique en rotation du volant de réglage 80 et de la tige filetée 86. Ce corps cylindrique 82 constitue également une cage munie d'orifices 98 servant au logement de billes de verrouillage telles que 100. Les billes 100 peuvent faire saillie à l'extérieur du corps cylindrique 82 comme cela est représenté sur la figure 3a et maintenues dans cette position par la portion 92b du poussoir 92 en forme de came. Dans la position représentée sur cette figure, les billes 100 pénètrent alors dans une gorge annulaire 102 en forme de rampe définie dans la face interne du corps 10 du bloc robinet-détendeur. On comprend que, dans cette position, les billes sont verrouillées dans le logement 102 par l'action de la came 92b du poussoir 92 sur les billes 100, cette action étant obtenue grâce à la présence du ressort de rappel 94.

Pour commander l'arrêt du robinet-détendeur, il suffit d'exercer une pression F sur la tête 92a du poussoir, ce qui entraîne la compression du ressort 94 et le déplacement vers la droite de la figure de la came 92b. Ce déplacement libère les billes 100 qui sortent du logement annulaire 102. Sous l'effet du ressort de détente 16, le volant 80 se déplace vers la gauche de la figure selon le sens de la flèche F1. Dans cette position, l'écrou 88 n'exerce plus aucune contrainte sur la deuxième extrémité du ressort de détente 16 et la consigne de réglage de pression étant nulle, on interrompt le débit de fluide.

Pour remettre en état de marche le.robinet-détendeur, il suffit d'exercer une pression sur le volant 80. Le déplacement du volant et donc du corps cylindrique 82 ramène les billes 100 au droit de la gorge annulaire 102. Les billes y sont maintenues par l'action de la came 92b du poussoir 92.

La figure 3b montre le volant 80 et la tête 92a du poussoir en position de Marche. La tête du poussoir fait saillie hors du volant et est donc accessible pour commander l'Arrêt.

La figure 3c montre ces mêmes pièces en position d'Arrêt. Seul le volant 80 est accessible. L'utilisateur peut ainsi voir si le robinet-détendeur est en position de Marche ou d'Arrêt.

En se référant maintenant aux figures 4a à 4c, on va décrire un quatrième mode de réalisation du bloc robinet-détendeur qui est proche du troisième mode de réalisation.

Dans ce mode de réalisation, le réglage de la contrainte appliquée au ressort de détente 16 est également obtenu par l'action d'un écrou 110 immobilisé en rotation dans l'alésage axial 112 du corps 10 du robinet-détendeur et qui coopère avec une tige 114 ou plus précisément avec l'extrémité filetée 114a de la tige 114. La rotation autour de l'axe longitudinal X-X' de la tige 114 est obtenue à l'aide d'un poussoir 116 qui, dans ce mode de réalisation, servira donc d'une part au réglage de la consigne de basse pression et à la fonction d'arrêt d'urgence. Le poussoir 116 comporte une tête 118 dont la périphérie 120 est de préférence guillochée pour permettre la rotation aisée du poussoir 116 autour de l'axe X-X'. La tige 122 du poussoir est creuse et sa section est par exemple carrée. La deuxième extrémité 114b de la tige 114 est également à section droite carrée et engagée dans l'alésage du corps 122 du poussoir. On a donc une solidarisation en rotation du poussoir 116 et de la tige 114 tout en maintenant le poussoir 116 libre de se déplacer en translation par rapport à la tige 114.

L'organe de commande de Marche est constitué par un volant 124 associé à un corps cylindrique 126 engagé dans l'alésage axial du corps 10 du robinet-détendeur. Le corps 126 est muni d'orifices tels que 128 pour constituer une cage pour des billes telles 130. Les billes 130 peuvent pénétrer dans un évidement annulaire formant rampe 132 ménagé dans la paroi interne du corps 10. Les billes 130 sont maintenues dans le logement 132 par une portion tronconique 134 du poussoir 116. Dans cette position du poussoir, le volant 124 est verrouillé dans la position axiale représentée sur la figure 4a qui correspond à l'état de Marche. La tête 118 du poussoir est reliée au corps cylindrique 126 par un ressort de rappel 136 qui tend à écarter le poussoir du corps cylindrique 126.

Le corps cylindrique 126 comporte une extrémité libre 138 qui, dans la position représentée sur la figure 4a, est appliquée sur une plaque 140 solidaire de la tige 114. On comprend que, dans cette position, le corps cylindrique 128 par son extrémité 138 applique au ressort de détente 16 une contrainte de réglage par l'intermédiaire de la tige 114 et de l'écrou 110.

Pour provoquer l'arrêt du robinet détendeur, il suffit d'exercer une pression selon le sens de la flèche F sur la tête 118 du poussoir pour que la partie formant came 134 libère les billes 130 qui peuvent ainsi sortir du logement annulaire 132. Sous l'effet du ressort de détente 16 agissant sur le corps cylindrique 126, le corps cylindrique et le volant 124 se déplacent selon le sens de la flèche F1. Dans cette position, le bord libre 138 du corps cylindrique 126 ne maintient plus la tige 114 et l'écrou 110 dans la position représentée sur la figure 4a. En conséquence, le ressort de détente 16 est libre et n'applique plus aucune contrainte de réglage à la membrane 14. Dans ces conditions, le clapet du détendeur se ferme.

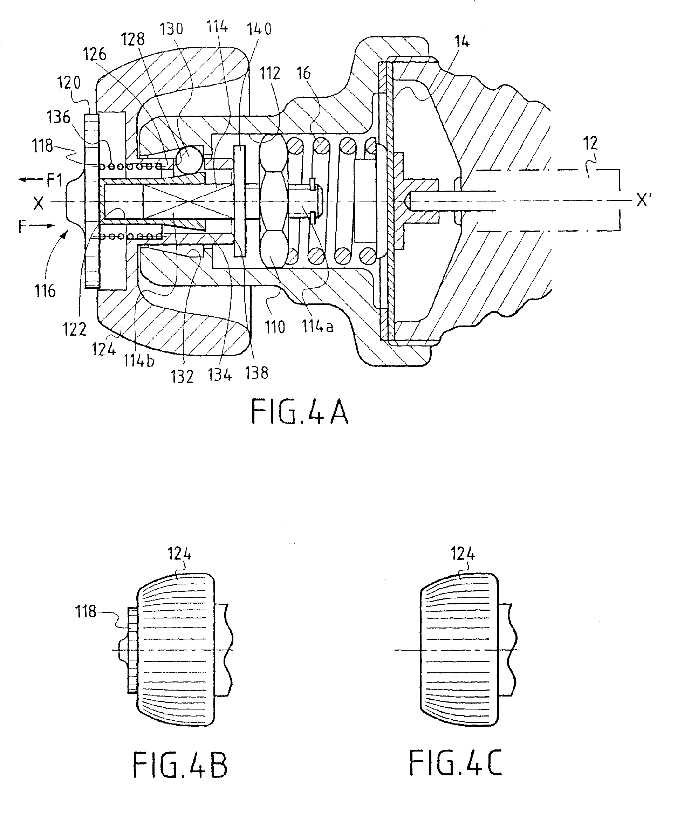

Les figures 4b et 4c représentent la tête 118 du poussoir et le volant 124 respectivement en position de Marche et d'Arrêt. Ce mode de réalisation présente les mêmes avantages que celui qui a été décrit en liaison avec les figures 3a à 3c.

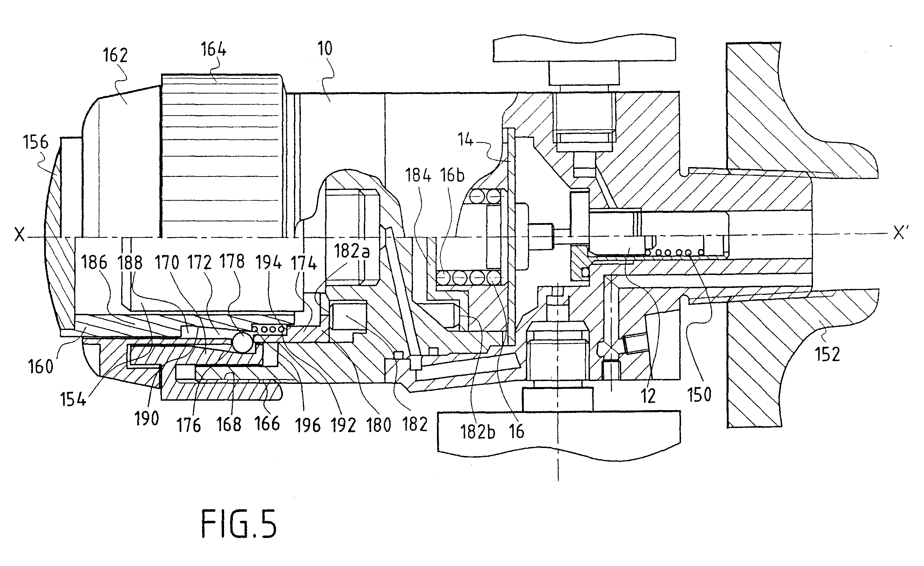

En se référant maintenant à la figure 5, on va décrire un cinquième mode de réalisation du bloc robinet-détendeur.

Sur cette figure, on a représenté l'ensemble du bloc avec son corps 10, son clapet 12, sa membrane déformable 14 et son ressort de détente 16. La figure 5 montre également le ressort de clapet 150. Le bloc est représenté monté sur le col 152 d'une bouteille de gaz. On a également figuré le raccord de remplissage 154 du robinet-détendeur ainsi que le capuchon 156 qui interdit à l'utilisateur non autorisé d'accéder au raccord 154.

Selon ce mode de réalisation, l'Arrêt du détendeur est obtenu par un poussoir 160 dont la tête est constituée par le capuchon 156. La remise en Marche est obtenue par une collerette-poussoir 162. Le réglage de la pression de consigne est obtenu en manoeuvrant un volant 164 par rotation autour de l'axe X-X'.

Le volant 164 comporte un taraudage 166 qui coopère avec un filetage 168 ménagé dans la face externe du corps 10 du robinet-détendeur. Le volant 164 est solidaire d'un premier manchon 170 monté à rotation dans le corps 10 autour de l'axe longitudinal XX' de celui-ci. La face interne du manchon 170 est munie d'une gorge annulaire 172 en forme de rampe.

La collerette-poussoir 162 est également solidaire d'un deuxième manchon 174 monté mobile en translation dans le manchon 170. Ce manchon 174 est muni d'orifices tels que 176 pour servir de cage à des billes telles que 178. Ces billes peuvent faire saillie hors de la face externe du manchon 174 pour pénétrer dans la gorge annulaire en forme de rampe 172 pour une position donnée relative des deux manchons. L'extrémité 180 du deuxième manchon 174 est, dans la position représentée sur la figure 5, appliquée contre une première extrémité 182a de piges telles que 182 guidées en translation selon la direction de l'axe XX' du corps 10 par des moyens convenables. La deuxième extrémité 182b des piges 182 est appliquée, dans la position représentée sur la figure 5, sur un plateau mobile en translation 184. Dans sa position représentée sur la figure 5, le plateau 184 est appliqué contre l'extrémité 16b du ressort de détente 16.

On comprend que, lorsque les manchons 170 et 174 occupent les positions représentées sur la figure 5, la rotation du volant 164 entraîne le déplacement en translation du manchon 170 et donc un déplacement identique du manchon 174 puisque ces deux manchons sont verrouillés en translation par les billes 178. Les piges 182 transmettent ce déplacement au plateau 184. On peut ainsi régler la contrainte du ressort de détente 16 à l'aide du volant 164.

La commande d'arrêt d'urgence est mise en oeuvre par le poussoir 160. Celui-ci présente un corps cylindrique 186 qui est monté mobile en translation selon la direction de l'axe XX' à l'intérieur du deuxième manchon 174. La face externe du corps cylindrique 186 comporte une gorge annulaire 188 qui définit une came annulaire 190. Un ressort de rappel 192 est monté entre un épaulement 194 du corps cylindrique 186 et un épaulement 196 du deuxième manchon 174. Dans la position de Marche, représentée sur la figure 5, la came 190 maintient les billes 178 dans le logement annulaire 172. La couronne-poussoir 162 est verrouillée par rapport au volant 164 et elle applique effectivement la contrainte requise au ressort de détente 16 via les piges 182 et le plateau 184.

Pour commander l'arrêt, il suffit d'exercer une pression sur le poussoir 160. Le déplacement de celui-ci comprime le ressort 192 et amène la gorge annulaire 188 du poussoir en regard des billes 178. Celles-ci sont libérées et sortent de la gorge 172 du premier manchon 170. La couronne-poussoir 162 est libérée et se déplace vers la droite de la figure sous l'effet du ressort de détente 16. Le plateau 184 n'exerce plus de contrainte sur le ressort de détente 16. La consigne de basse pression étant nulle, le débit de fluide est interrompu. Dans cette position, la tête du poussoir 160 est masquée par la couronne-poussoir 162, ce qui indique visuellement à l'utilisateur l'état d'Arrêt.

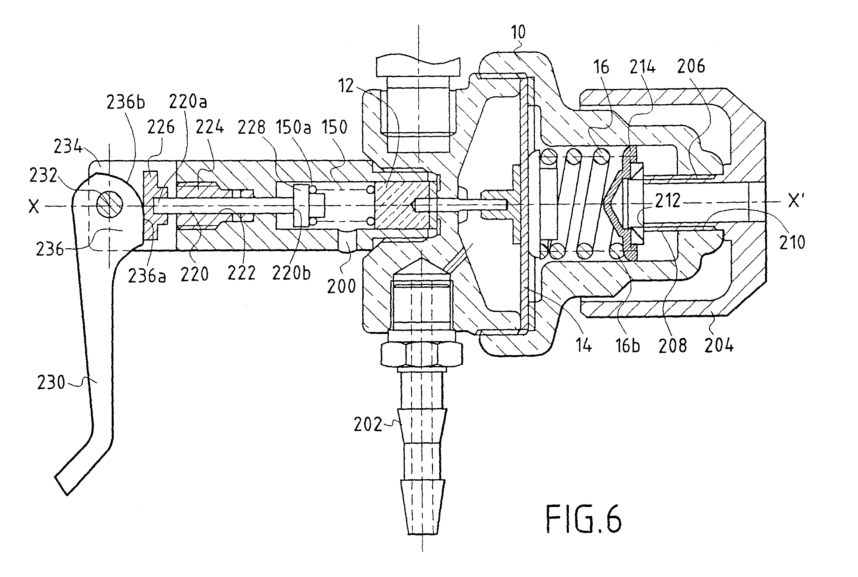

En se référant maintenant à la figure 6, on va décrire un sixième mode de réalisation du bloc robinet-détendeur. Selon ce mode de réalisation, la commande de Marche-Arrêt est obtenue par une action sur le ressort de clapet.

Sur cette figure, on a représenté l'ensemble du bloc robinet-détendeur. Il comprend un corps 10 avec son entrée haute pression 200 et sa sortie d'utilisation basse pression 202. On retrouve le clapet 12 avec son ressort de clapet 150, la membrane déformable 14 et le ressort de détente 16.

Selon ce mode de réalisation, le réglage de la basse pression est obtenu de façon standard à l'aide d'un volant 24 solidaire d'un manchon 206 d'axe XX' qui est fileté extérieurement en 208. Le filetage 208 coopère avec un alésage taraudé axial 210 ménagé dans le corps 10. L'extrémité 212 du manchon 206 entraîne un plateau de pression 214 qui agit sur l'extrémité 16b du ressort de détente. La rotation du volant 204 est convertie en un mouvement correspondant de translation du plateau 214, ce qui permet de régler l'effort développé par le ressort de détente 16 et donc la valeur de la basse pression.

La commande de Marche-Arrêt est obtenue par une action sur le ressort de clapet 150.

Une tige 220 disposée selon l'axe XX' est montée libre en translation dans un alésage 222 du corps 10 muni d'un système d'étanchéité 224.

L'extrémité 220a de la tige 220, qui fait saillie hors du corps 10, est munie d'une tête 226. L'autre extrémité 220b de la tige est équipée d'un plateau de pression 228 qui agit sur l'extrémité 150a du ressort de clapet 150. Le déplacement de la tige 220 est commandé par un levier 230 monté pivotant autour d'un axe 232 disposé orthogonalement par rapport à l'axe XX' du corps 10. L'axe 232 est monté dans des oreilles 234 solidaires du corps 10. L'extrémité du levier entourant l'axe 232 forme une came 236 qui présente une portion active plane 236a et une portion inactive 236b. Lorsque le levier 230 occupe la position représentée sur la figure 6, qui correspond à la position d'Arrêt, la partie active 236a de la came agit sur la tête 226 de la tige 220 pour comprimer le ressort de clapet 150. Cette contrainte est supérieure à la contrainte permettant la régulation. Elle entraîne donc la fermeture du clapet 12. Cette contrainte doit toujours être supérieure à l'effort d'ouverture du clapet de détente 12 (quel que soit le réglage de la consigne de détente et quel que soit le niveau de purge de la bouteille sur laquelle est monté le bloc robinet-détendeur) en lui appliquant au moins l'effort minimal lui assurant son étanchéité.

La mise en marche se fait en ramenant le levier 230 selon la direction de l'axe XX', position dans laquelle la portion inactive 236b de la came n'agit pas sur la tête 226 de la tige 220.

En variante, on pourrait prévoir que l'extrémité 220b de la tige 220 agisse directement sur le clapet de détente 150.

## Revendications

1. Robinet-détendeur comprenant :
- un corps (10) présentant un axe longitudinal et muni d'une entrée de fluide à haute pression et d'une sortie de fluide à basse pression, et, à l'intérieur dudit corps :
- un ressort de détente (16),
- une membrane déformable (14) sur laquelle agit une première extrémité du ressort de détente,
- un clapet (12) dont une première extrémité est solidaire en translation de ladite membrane ; et
- un ressort de clapet (150) dont une première extrémité est reliée à la deuxième extrémité du clapet,
ledit robinet-détendeur comprenant en outre :
- un ensemble de réglage de la basse pression comportant :
- un dispositif de réglage (36, 28, 64, 56, 80, 116, 164, 204) monté rotatif autour dudit axe longitudinal,
- des moyens (18, 50, 86, 88, 114, 110, 180, 182, 206) de conversion dudit mouvement de rotation du dispositif de réglage en un mouvement de translation selon ledit axe longitudinal, et
- un organe de transmission (24, 58, 88, 110, 184, 214), relié à la sortie des moyens de conversion, et mobile en translation selon ledit axe longitudinal sous l'effet des moyens de conversion, pour appliquer à la deuxième extrémité (16b) du ressort de détente une contrainte de réglage ; et
- un ensemble de commande de Marche-Arrêt dudit robinet comportant :
- au moins un organe de commande (36, 40, 64, 69, 92, 124, 160, 162, 230, 236) distinct dudit dispositif de réglage, apte à prendre par rapport audit dispositif de réglage une première position de Marche et une deuxième position d'Arrêt, l'actionnement dudit organe de réglage étant indépendant de la position angulaire dudit dispositif de réglage, et
- un mécanisme de commande (28, 56, 100, 102, 130, 132, 178, 172, 220) apte, lorsque ledit organe de commande est dans sa deuxième position d'Arrêt, à :
. soit supprimer la contrainte appliquée par ledit ressort de détente (16) à ladite membrane (14), par quoi la consigne de réglage de la basse pression est nulle et le clapet est fermé,
. soit appliquer au clapet (12) une contrainte telle que la force exercée sur ledit clapet en interdisant l'ouverture.

2. Robinet-détenteur selon la revendication 1, caractérisé en ce que lesdits moyens de conversion comprennent un manchon fileté (18, 50) extérieurement solidaire en rotation dudit dispositif de réglage coopérant avec un taraudage (22, 54) ménagé dans le corps (10) du robinet, et en ce que ledit organe de commande (36, 64) comporte une portion formant came (40, 72) montée pivotante autour d'un axe orthogonal audit axe longitudinal et apte à coopérer avec ledit mécanisme de commande, ladite came présentant une première zone (44, 70) dans laquelle la contrainte appliquée par le ressort de détente (16) à la membrane (14) est annulée et une deuxième zone (42, 68) dans laquelle ladite contrainte est effectivement appliquée.

3. Robinet-détendeur selon la revendication 1, caractérisé en ce que ledit organe de commande comprend :
. un premier organe de commande de marche (80, 124, 162) mobile selon la direction dudit axe longitudinal et maintenu en position active par un système à billes (100, 130, 178) qui en position verrouillée solidarise en translation ledit premier organe de commande audit corps (10) dans une position où ledit ressort de détente (16) applique une contrainte à ladite membrane (14), ledit premier organe de commande étant apte à coopérer avec ledit ressort de détente ; et
. un deuxième organe de commande d'arrêt formant poussoir (92, 116, 160) associé à un ressort de rappel (94, 136, 192), ledit poussoir comportant une portion formant rampe (92b, 134, 190) apte à coopérer avec lesdites billes (100), ladite portion formant rampe au repos maintenant lesdites billes en position de verrouillage, et, lorsque ledit premier organe de commande est en position active, sous l'effet d'une pression sur ledit poussoir (92c, 116, 160), ladite portion formant rampe (92b, 134, 190), sous l'effet du déplacement résultant de ladite pression, déverrouillant lesdites billes, par quoi ledit premier organe de commande est déplacé par l'effet du ressort de détente pour occuper une position inactive dans laquelle la contrainte appliquée par le ressort de détente (16) à ladite membrane (14) est supprimée.

4. Robinet-détendeur selon la revendication 1, caractérisé en ce que :
- ledit dispositif de réglage est un volant (204) ;
- lesdits moyens de conversion comprennent un manchon (206) fileté extérieurement coopérant avec un taraudage ménagé dans ledit corps du robinet, une première extrémité du manchon étant solidaire dudit volant et dont la deuxième extrémité est solidaire en translation dudit organe de transmission (214) ;
- ledit mécanisme de commande comprend une tige (220) mobile en translation selon ledit axe longitudinal dont une première extrémité (228) est appliquée contre la deuxième extrémité (150a) du ressort de clapet (150), et
- ledit organe de commande comprend des moyens d'actionnement (230, 236) coopérant avec la deuxième extrémité (226) de ladite tige (220) et aptes à prendre une première position de marche dans laquelle la première extrémité de la tige applique au ressort de clapet (150) la contrainte normale de fonctionnement et une deuxième position dans laquelle la première extrémité de ladite position dans laquelle la première extrémité de ladite tige applique au ressort de clapet ladite contrainte interdisant l'ouverture du clapet.

5. Robinet-détendeur selon la revendication 2, caractérisé en ce que ledit mécanisme de commande comprend une tige (28) traversant ledit manchon (18) et ledit ressort de détente (16) libre en translation par rapport au manchon et solidaire de celui-ci en rotation, une première extrémité (28a) de ladite tige étant solidaire de la première extrémité du ressort de détente et dont la deuxième extrémité (28b) fait saillie hors dudit dispositif de réglage, en ce que ledit organe de commande est monté pivotant sur la deuxième extrémité (28b) de ladite tige, ladite première portion de la came (44) coopérant avec ledit dispositif de réglage (26) pour exercer une traction sur ladite première extrémité du ressort de détente (16), ladite deuxième portion de la came (42) laissant libre ladite deuxième extrémité de la tige et en ce que ledit organe de commande comprend en outre un levier (36) solidaire de ladite came (40) pour provoquer le pivotement de ladite came autour de son axe et pour provoquer la rotation du dispositif de réglage (18, 24) autour dudit axe longitudinal.

6. Robinet-détendeur selon la revendication 2, caractérisé en ce que ledit mécanisme de commande comprend une tige (56) traversant ledit manchon (50) librement en translation et en rotation, la première extrémité (56a) de ladite tige étant solidaire dudit organe de transmission (58) et sa deuxième extrémité (56b) faisant saillie hors dudit manchon, en ce que la deuxième extrémité (60) dudit manchon comporte une extension (62) sur laquelle est monté pivotant ledit organe de commande (64), ladite première portion de la came (70) n'appliquant aucun effort à la deuxième extrémité de ladite tige, ladite deuxième portion (68) de la came appliquant une contrainte à la deuxième extrémité de ladite tige et solidarisant en translation ladite tige (56) et ledit dispositif de réglage (50).

7. Robinet-détendeur selon la revendication 3, caractérisé en ce que ledit mécanisme de commande et lesdits moyens de conversion comprennent une tige filetée (86) disposée selon ledit axe longitudinal et coopérant avec un écrou (88) immobilisé en rotation par rapport audit corps, une des faces (88b) dudit écrou étant apte à être en contact avec la deuxième extrémité (16b) du ressort de détente (16) pour constituer l'organe de transmission, en ce que ledit dispositif de réglage forme également ledit premier organe de commande et comprend un volant (80) et un corps cylindrique (82) solidaire en rotation dudit volant et engagé dans le corps dudit robinet, le corps cylindrique formant une cage pour lesdites billes (100), l'extrémité interne (84) dudit corps cylindrique étant solidaire de ladite tige, ledit corps comportant un évidement interne annulaire en forme de rampe (102) apte à recevoir lesdites billes lorsqu'elles font saillie hors dudit corps cylindrique et en ce que ledit deuxième organe de commande en forme de poussoir (92) est monté libre en translation dans ledit corps cylindrique, ledit ressort de rappel (94) étant monté entre la tête du poussoir et le corps cylindrique de telle manière que la came du poussoir (92b) maintienne les billes dans le logement annulaire lorsque ledit ressort de rappel au repos.

8. Robinet-détendeur selon la revendication 3, caractérisé en ce que ledit mécanisme de commande et lesdits moyens de conversion comprennent une tige filetée (114) disposée selon ledit axe longitudinal et dont une première extrémité (114a) est filetée et coopère avec un écrou (110) immobilisé en rotation par rapport audit corps, une des faces dudit écrou étant apte à être en contact avec la deuxième extrémité du ressort de détente (116) en constituant l'organe de transmission, en ce que ledit deuxième organe de commande comprend un volant (124) et un corps cylindrique (126) disposé à l'intérieur du corps (10) du robinet, ledit corps cylindrique formant une cage pour lesdites billes (130), ledit corps cylindrique étant solidaire du volant par sa première extrémité, sa deuxième extrémité (138) étant ouverte et apte à coopérer avec ladite tige lorsque ledit deuxième organe de commande est en position de marche ; et en ce que ledit premier organe de commande forme également le dispositif de réglage, en ce que ledit ressort de rappel (136) est monté entre la tête (118) dudit poussoir et la deuxième extrémité du corps cylindrique, en ce que l'extrémité libre du poussoir est solidaire en rotation de la deuxième extrémité (114b) de la tige et en ce que, lorsque le deuxième organe de commande est en position marche et que le ressort de rappel (136) est au repos, la came (134) du poussoir verrouille lesdites billes dans le logement annulaire (132) du corps de robinet.

9. Récipient de fluide sous pression, notamment bouteille de gaz sous pression, équipé d'un robinet-détendeur selon l'une quelconque des revendications 1 à 8.
